# EUROPEAN PATENT SPECIFICATION

(11) **EP 1 529 498 B1**
(45) Date of publication and mention of the grant of the patent: **11.06.2014**
(21) Application number: 03025238.1
(22) Date of filing: 05.11.2003
(51) Int. Cl.: A61C 8/00, A61C 13/00

(54) **Multi part non metal implant**
Mehrteiliges nichtmetallisches Implantat
Implant non-métalique à plusieurs parties

(43) Date of publication of application: 11.05.2005
(73) Proprietor: Dentsply Implants Manufacturing GmbH, 68229 Mannheim (DE)
(72) Inventor: Wolf, Dietrich, 69123 Heidelberg (DE)
(74) Representative: Lüdcke, Joachim Moritz

(56) References cited:
- EP-A- 0 470 305
- WO-A-97/30654
- WO-A-03/003939
- US-A- 4 259 072
- US-A- 4 713 006
- US-A- 5 674 072
- US-A- 5 958 428
- US-A1- 2002 155 412
- US-A1- 2003 104 338
- US-A1- 2003 143 514

## Description

### Introduction and Background

The present invention relates to an implant comprising a first fixture component intended for insertion into a bone, and at least one further abutment component for providing a base for a superstructure.

A dental superstructure may comprise an individual tooth replacement or dental prosthesis. For intra-ossal tooth implants a distinction is made between so called single-phase and two-phase systems. Generally, a single-phase implantation is made in a single surgery step, often for early loading, and a two-phase implantation requires two surgery steps, the first for inserting an implant component into the bone, which is allowed to healing-in for a determined time, mostly tissue covered, and the second step for reopening the tissue, where applicable, and affixing further implant component for completing the desired functional capability of the implant. A preference is depending on the needs and corresponding medical treatment concept for an individual patient. In a two-phase system a first component is inserted into the jawbone concealed under the gum in a first face, which enables the implant component to osseointegrate safely without stress. In a second phase a further component (abutment) carrying the artificial tooth or dental prosthesis is applied and mounted to the first component inserted into the jawbone. The component anchored in the jawbone has typically an appropriate screw profile or other macroscopic surface structure to achieve a firm primary anchorage in the jawbone. Various metal materials are known to be suitable for such kind of components whilst the use of typically commercially pure titanium, or titanium alloys approved for dental applications are preferred in practical application.

There are also a number of single phase single part (monobloc) implants known in the art made of zirconium oxide ceramics. Yttrium stabilized zirconium oxide ceramics have proven mechanical strength and biocompability as dental crown material for many years. A method for producing dental zirconium oxide crown superstructure is described for instance in WO 03/007834 A1. Suitable use of single phase monobloc zirconium oxide dental implants particularly for patients suffering from allergy against metallic dental implants is described in U. Volz: ZZI, 2003: 19 (3), pages 176 to 180. Typically, the dental crown or bridge is mounted to the implant by cementing.

Over the past few years different types of dental implants have been practically used which have a generally cylindrical shape or a shape somewhat similar to a natural tooth root. An aluminum oxide ceramic dental implant whose upper end has a provision for anchoring a superstructure for the dental prosthesis is for instance disclosed in US 4,185,383 A. The dental implant comprises a post or stem element which can be implanted into the jawbone and is repeatedly stepped downward from the head towards the root. This dental implant has proven good in practice in the past and is known in the art as the "Tübingen Implant". A metallic post is cemented into this implant.

A set of monobloc implants with angled post stems for receiving a dental superstructure made from zirconium ceramics are known from WO 02/24098. Typically, dental implants or superstructure elements made of zirconium oxide ceramics are manufactured by molding a powdery raw material with appropriate pressure to form a green body of the intended shape and then sintering the green body to the final density of the ceramic body. The sintered ceramic body can be treated by machining and grinding as commonly known, with the also known disadvantages of these methods, that is heavy tool abrasion and costly machining time. However, machining of internal structure within a sintered ceramic body, like an internal thread is extremely costly and and economically unacceptable for industrial scale manufacturing. Zirconium silicate oxides and zirconium alumiunium oxides have been suggested as appropriate compositions.

DE 101 59 683 A1 suggests a single phase (monobloc) implant for the use of zirconium oxide ceramics, and particularly providing a threaded portion for insertion into the jawbone with a ceramic or metal plasma coating, especially a titanium coating.

WO 03/045268 A1 particularly describes that ceramic implant components for insertion into a bone have been found unsuitable, and particularly, that it seems impossible to provide zirconium oxide ceramic fixtures as a replacement for known metal two part implant components.

For two phase systems great importance pertains to the mechanical joining both of the first component inserted into the jawbone and the connection between the first component and the further components carrying the dental superstructure, projecting into the mouth cavity. General requirements for such connections are the absorption and transfer of high masticatory forces at minimum geometrical dimensions and a connection between the implant components being free from play and as impervious to bacteria as possible. Such connections for metal two phase implants are known from the prior art, for instance, one connection based on a cone is known from US 4,772,204 A corresponding to WO 85/02337 and US 5,674,072 corresponding to EP 0 707 835.

Anatomical, biomechanical and aesthetic aspects typically require the use of a mechanical connection between the implant components omitting any rotation or move between the components. Not only in case where the mentioned requirements necessitates the use of a mechanical connection having an angle between the part anchored in the bone and the part carrying the dental structure which projects into the mouth cavity due to the individual conditions of teeth arrangement in the mouth of the patient, aesthetical and functional performance typically require exact rotational positioning of the components to each other even where the axis of the components are aligned to each other. Such positional accuracy is typically not effected by a simple threaded screw fitting as described in some prior art documents from the 1970's. Current fittings as mentioned before allow practically infinite rotational positioning which, however, requires corresponding mechanical positioning function in the mouth of the patient. An alternative is a set of dental implant components having positive joints, such as true-fitting hexagonal or octagonal geometries which allow rotational positioning of both components relative to each other in predetermined positions. Such positive joints are described in US 5,199,873 A1 corresponding to EP 0 438 048, US 5,125,840 and others.

Although these connections providing the advantage that the adjustment work in the mouth of the patient is much less than that of a cone fitting, these have the disadvantage that the rotational position is defined in steps and prevents rotation of position, as the component inserted into the bone and becoming firmly anchored there after the healing-in phase predetermines the final position of the support projecting into the mouth to which a dental prosthesis is applied.

A further problem with those positive fit rotational locks is the necessity of producing such connection elements with tolerances to ensure that the parts of the connection can be mounted together at all, thus, in practice makes it difficult, if not impossible, to provide a connection being free from play under the pulsating stress caused by the masticatory load applied with large forces and at a high cyclic rate. This may cause that a small amount of play present in the assembled structure at the beginning will become larger as the functional period increases causing small gaps between the components causing a risk of an intrusion of bacteria into the gap and/or mechanical disintegration of the assembly.

An important issue with respect to dental implants has been described as the mechanical connection between the implant and the jawbone. Any dental implant is subjected to high occlusal forces which are cyclically applied to the implant over many years. Whilst a large implant provides the advantage that the forces can be transferred to the bone over a larger surface area and, thus, the mechanical stress is reduced, a large implant has the disadvantage that the remaining bone material may be reduced and incapable of receiving the forces transferred by the implant because of a stress overload of the bone material. Further, the shape of the implant has a high impact on the mechanical reliability of the implant because the shape of the implant influences the direction of the forces transferred to the bone. Therefore, a lot of scientific work and lots of scientific publications and patent applications have been published over the years trying to provide an ultimate solution or at least directions for obtaining the optimum solution for the specific conditions of an individual patient.

WO 99/17675 and US 6,280,193 B1 disclose a method and apparatus for forming an internal thread and hexagonal portion of a cavity inside an implant component for insertion into the jawbone of a patient made of zirconium oxide ceramics. This internal shaping is obtained during the initial molding step as described above, wherein a metallic insert is provided mounted in an upper part of the mold, having a negative surface shaping compared of that intended for the implant. The ceramic powder is pressed around this insert during the molding step, and the insert is removed after opening the mold. The two documents describe several ways of removing the insert, including drilling it out. Another proposed method includes cooling of the molded body in liquid nitrogen to ease removal of the insert.

Particularly, US 6,280,193 B1 states that it is practically impossible to drill the threaded hole correctly once the implant component has been molded. The disclosure specifically refers to the problems related to fixing of a non ceramic implant component into an unthreaded bore of a ceramic implant component. However, the methods described require high costs for preparing the molding tools, and relatively high production costs due to the many working steps required.

US 2003 / 0 143 514 A1, which corresponds to FR 2 790 659 A, describes an implant comprising a fixture component intended for insertion into a bone, at least one further abutment component for providing a base for a prosthetic superstructure and a connecting element for mechanically securing the abutment to the fixture. The fixture comprises an external thread or other protrusions for improving engagement between the fixture and the bone. The connecting element detachably interconnects the fixture and the abutment. At least the fixture and the abutment are made of non-metal material. The fixture comprises a recess or cavity for detachably receiving the connecting element. The fixture further comprises interlocking means within said cavity or recess for engagement with corresponding interlocking means of the connecting element.

US 2003 / 0 104 338 A1 describes an implant comprising a fixture component intended for insertion into a bone, at least one further abutment component for providing a base for a prosthetic superstructure and a connecting element for mechanically securing the abutment to the fixture. The fixture comprises an external thread or other protrusions for improving engagement between the fixture and the bone. The connecting element detachably interconnects the fixture and the abutment. At least the fixture and the abutment are made of non-metal material. The fixture comprises a recess or cavity for detachably receiving the abutment of the implant and the connecting element. The fixture further comprises interlocking means within said cavity or recess for engagement with corresponding interlocking means of the abutment and the connecting element. The fixture component defines a longitudinal axis. The recess or cavity comprises a portion being tapered along the axis.

### Summary of the Invention

It is therefore an object of the invention to provide an improved dental implant comprising a dental implant component for inserting into the jawbone of a patient which provides flexibility for a dentist preparing dental non-metal restoration.

It has been surprisingly found that the connecting arrangement according to the present invention provides better flexibility in preparing dental prosthesis even for patients suffering from incompability to medical grade metal implants.

This and other objects are achieved by an implant comprising a fixture component intended for insertion into a bone, at least one further abutment component for providing a base for a prosthetic superstructure and a connecting element for mechanically securing the abutment to the fixture,
wherein the fixture comprises an external thread or other protrusions for improving engagement between the fixture and the bone,
wherein the connecting element detachably interconnects the fixture and the abutment, wherein at least the fixture and the abutment are made of non-metal material,
wherein the fixture comprises a recess or cavity for detachably receiving the abutment of the implant and the connecting element,
wherein the fixture further comprises interlocking means within said cavity or recess for engagement with corresponding interlocking means of the connecting element, and wherein the recess or cavity comprises a portion in the form of a hexagon with flat surfaces, the fixture component defining a longitudinal axis, and the portion being tapered along the axis.

In a preferred embodiment of the invention, the non-metal material is selected from ceramic materials, plastics, or mixtures thereof, preferred as the non-metal material is a zirconium oxide based ceramic material, which may comprise yttrium oxide, preferably in an amount of up to about 8 % in weight, or magnesium oxide or calcium oxide.

For easy and less costly manufacture even of a single implant, at least the cavity and the interlocking means are manufactured by machining a pre-sintered ceramic body, in particular if the dimensions of the pre-sintered ceramic body during machining are a reproduction of the desired end product at an enlarged scale.

In a most preferred embodiment of the invention the scale is variable in all three dimensions, and advantageously determined by a three dimensional transfer function f (x, y, z). The three dimensional scale is preferably determined from the three dimensional distribution of the density within the pre-sintered green body.

To enhance healing-in of the fixture it is suitable that at least the fixture has a surface roughened by an abrasive mechanical, physical or chemical surface treatment, particularly, if the surface treatment comprises laser treatment and plasma etching.

Tissue integration can be enhanced if at least a part of the circumferential surface of the fixture is provided with a coating, the coating comprises one or more of the following: a biomolecular composition, peptides, polypeptides, amino acids, poly amino acids, growth factors. This may also comprise a primary amino group, a secondary amino group, a carboxyl group, an amide group, a phosphono group and/or hydroxyl ethylenediamine, or trimethylene-diamine low molecular weight polyamino acids.

In a preferred embodiment the coating comprises a compound having a domain that mimics collagen binding to cells, and having enhanced cell-binding with respect to collagen, the compound in an amount effective to promote cell attachment to the fixture.

Suitably, the coating comprises a synthetic peptide immobilized on the substrate, the peptide having a domain that mimics collagen binding to cells and having enhanced cell-binding with respect to collagen. It has been proven advantageous for promoting osseointegration if the coating comprises a synthetic peptide having the sequence Gly-Thr-Pro-Gly-Pro-Gln-Gly-Ile-Ala-Gly-Gln-Arg-Gly-Val-Val, and/or if the coating comprises synthetic compositions that have a biological activity functionally comparable to that of all or some portion of P-15.

Preparation and use of such kinds of coatings are described in more detail in US 6,268,348 A. These coating compounds that are structurally or biologically analogous to a small region of collagen and mimic the conformation recognized by collagen binding species. The region from which synthetic peptides of the invention have been designed is sometimes referred to as "P-15", includes all or part of 15 amino acid residues, Gly-Thr-Pro-Gly-Pro-Gln-Gly-Ile-Ala-Gly-Gln-Arg-Gly-Val-Val, of the α1(I) chain of collagen, and spans approximately residues 766-780 of this chain. The P-15 region does not occur as a natural fragment of collagen nor is it a product of natural enzymatic cleavages. However, the coordinates defining the three-dimensional surface or shape that includes the presence of -Ile-Ala- in a p-bend conformation are given below. The surface or shape defined by these coordinates displays certain biological activities. The dipeptide -Ile-Ala- itself displays 60% of the biological activity to that of P-15. This confirms that the Ile-Ala- β-bend in the collagen analogues is critical to the biological activity, and indeed constitutes by itself an essential part of the inventive peptides.

The coating may involve synthetic compositions that have a biological activity functionally comparable to that of all or some portion of P-15. By "functionally comparable," is meant that the shape, size, and flexibility of a compound is such that the biological activity of the compound is similar to the P-15 region, or a portion thereof. Biological activities that may be possessed by the peptide include inhibition of collagen synthesis, inhibition of collagen binding, and inhibition of cell migration. Of particular interest to the present invention is the property of enhanced cell binding. Useful compounds should be selected on the basis of similar spacial and electronic properties as compared to P-15 or a portion thereof. These compounds typically will be small molecules of 100 or fewer amino acids or in the molecular weight range of up to about 5,000 daltons, more typically up to 2,500 daltons. Inventive compounds will be illustrated with synthetic peptides; however, nonpeptides mimicking the necessary conformation for recognition and docking of collagen binding species are also contemplated as within the scope of this invention. For example, cyclic peptides on other compounds in which the necessary conformation is stabilized by nonpeptides (e.g., thioesters) is one means of accomplishing the invention. Preparation and use of such coatings are described in more detail in US 5,958,428 A.

In a preferred application of the invention a dental prosthesis arrangement comprises at least one dental implant as described above.

The invention may be put into effect most effectively by treating a human or animal being with an implant and/or a fixture as described above.

### Brief Description of the Drawings

The present invention will be more easily and apparently understood from the following description of examples of embodiments of the invention.
Fig. 1 schematically shows a cross sectional view of an implant not falling under the scope of the claims;
Fig. 2 is a side elevational view of an embodiment of a dental implant of the invention partially in section along its axial plane;
Fig. 3 is a view corresponding fig. 2, but with the connecting means inserted; and
Fig. 4 is a side elevational view of a second embodiment of an implant component according to the invention.

### Detailed Description of the Invention

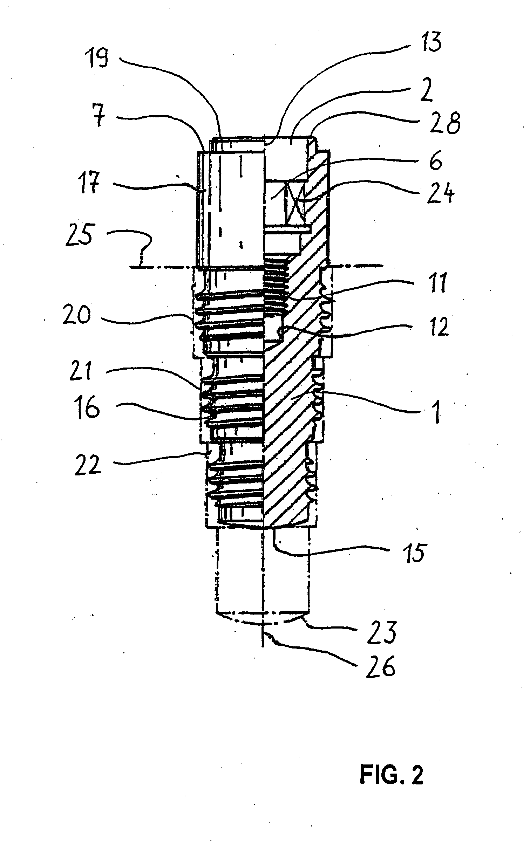

Figures 2 to 4 show various embodiments of dental implant components as examples of the invention. Although each of the embodiments has its own advantages in use common features will not be described in detail with each of the embodiments. Therefore, similar features in the different embodiments will be designated with the same reference numbers. Any description of these embodiments is for illustrative purpose and of exemplary nature only. Nothing described or not described in this regard should be construed as a limitation of what is claimed.

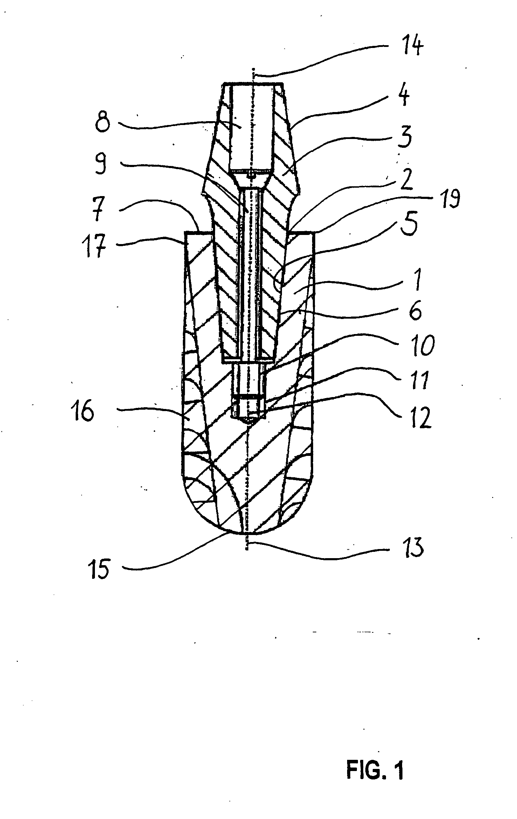

In figure 1 a two-phase, two component tooth implant is shown, which is capable of being steplessly positioned in its rotational orientation, including a first implant fixture component 1, having a central cavity opening 2, which fixture 1 is capable of being inserted into a jawbone, and a second implant abutment component 3 which may carry a dental prosthetic superstructure (not shown), like a crown or bridge. The second component 3 includes a conical seating element 4 for the dental prosthesis and a part 5 which fits into said central cavity 6 of said first implant component 1. The central cavity 6 within said first implant component 1 is conical in shape and the part 5 of said second implant component 3 which fits into the central cavity 6 in the first implant component 1 is a matching cone which mates with the opening 2 in the top surface 7 of the first component 1.

The second implant component 3 has a central bore 8 passing through said second implant component 3. Within this central bore 8 is located the tapered cylindrical shaft of reduced diameter of a tension screw 9. The screw 9 has a widened end with an outer fastening thread 10 which fits into the inner thread 11 of a blind bore 12. The central seating opening 2 of said first implant component 1 comprises the blind bore 12 as an extended region beyond the depth necessary to accommodate the tapered cone 5 of the second implant component 3 and which region accommodates the tip of the screw 9.

Both implant components 1, 3 each define a longitudinal axis 13, 14, respectively. The axes of the two conical parts 4, 5 of the second implant component 3 are in general alignment with each other, however, these axes may form an angle for specific implantation conditions.

It has proved advantageous if the angle of the conical cavity 6 of the first implant component 1 and the angle of the part 5 of the second implant component 3 fitting within it are selected so as to produce a self-locking cone connection. The angles are therefore of practically identical sizes.

The first implant component 1 has an essentially cylindrical outer form with a spherically rounded end 15 and a thread 16 of specially adapted geometry (e.g., with a varying flank depth), as known from and described in US 5,674,072 A. The outer surface of the implant component 1, except the top region 17 of it, may be roughened by an abrasive mechanical, physical or chemical surface treatment, like laser treatment and plasma etching. of the surface to enhance bone integration of the implant component 1. The outer circumferential surface of the implant component 1 may be further treated by etching in suitable acid composition. The fixture 1 may be further provided with a porous or micro-rough coating, e.g. a hydroxylapatite coating.

However, the top section 17 of the fixture component 1, and especially the top surface 7 of the first implant component 1, may be micro-roughened, preferably to an arithmetical mean roughness R_{A} of about 0.7 µm to about 1.1 µm.

The surface of the fixture 1 may be directly, or, via the porous or micro-rough coating acting as an interlayer coating, provided with a coating, wherein at least a part of the circumferential surface of the fixture 1 is provided with the coating. The coating may comprise one or more of the following: a biomolecular composition, peptides, polypeptides, amino acids, poly amino acids, growth factors.

A preferred coating comprises a compound having a domain that mimics collagen binding to cells, and having enhanced cell-binding with respect to collagen, the compound in an amount effective to promote cell attachment to the fixture. More preferred is a coating comprising a synthetic peptide immobilized on the substrate, the peptide having a domain that mimics collagen binding to cells and having enhanced cell-binding with respect to collagen. Specifically preferred is a coating comprising a synthetic peptide having the sequence Gly-Thr-Pro-Gly-Pro-Gln-Gly-Ile-Ala-Gly-Gln-Arg-Gly-Val-Val.

The coating comprises suitably synthetic compositions that have a biological activity functionally comparable to that of all or some portion of P-15.

The cone connection enables the implant components 1, 3 to be firmly joined together in a gap-free, rotationally stable connection due to the cone angle being matched to the friction ratios of the cone connection and to the central tension screw 9 being aligned within the axis 14 of the cone 5, the rotational position of the two implant components 1, 3 being freely and steplessly selectable during assembly.

The first and second implant components 1, 3 are made of non-metal material, preferably selected from ceramic materials, plastics, or mixtures, or compounds thereof.

A preferred non-metal material is a zirconium oxide ceramic material, which may comprise yttrium oxide, preferably in an amount of up to about 8 % in weight, or magnesium oxide or calcium oxide. It may comprise zirconium oxide as the main component, or mixtures of zirconium oxide and aluminum oxide.

The fixture 1 is preferably obtained by determining the desired dimensions for the final implant component 1, pressing and pre-sintering a green blank body from a powdery composition as mentioned above, to an average density below the average final product density to form a shaped green blank body, wherein the pre-sintered green blank is able to withstand the forces of machining without deterioration, then determining the three dimensional density distribution within the green body, calculating a three dimensional scale function from the density distribution within the green body, machining particularly the interior cavity 6 of the green body at the calculated three dimensional scale, sintering the machined green body to final density to obtain the fixture 1, and optionally roughening and/or coating at least a part of the surface of the sintered fixture 1 as described above.

The dimensions of the pre-sintered green blank body during machining are a reproduction of the desired end product at an enlarged scale, wherein the scale is variable in all three dimensions and preferably determined by a three dimensional transfer function f (x, y, z) determined from the three dimensional distribution of the density within the pre-sintered green blank body.

The first implant component 1 may be is primarily anchored in the bone, being surrounded and held stable by the bone structure during the healing-in phase, by means of a special outer thread 16, the flank geometry of which varies over the length of the implant 1. The special form of the outer thread 16 is such that the masticatory forces are dispersed in a direction perpendicular to the surfaces of the thread flanks and directed into the depth of the bone mass in correspondence with the form of these flanks which varies over the length of the implant 1. This positive fit is supported by recesses at the lower end and by a microstructure on the entire surface which comes into contact with the spongy bone mass. Inner thread 11 matches with the thread of the central tension screw 9.

The second implant component 3 has the form of two cylindrical truncated cones 4, 5, one mounted on the other by their bases, having axes 14 which can be aligned to each other or enclose an angle, one of the two cones 5 fitting into the central cavity 6 of the first implant component 1 anchored in the bone, while the other cone 4 supports the dental prosthesis.

By means of a standardized, equally dimensioned cone connection, it is possible for parts 1 which are to be anchored in the jawbone and which are of widely differing geometry, e.g. having different diameters and lengths, to be freely combined with parts 3 which project into the mouth cavity, so that the individual conditions of the patient to be treated are accommodated to a high degree with a relatively small number of components.

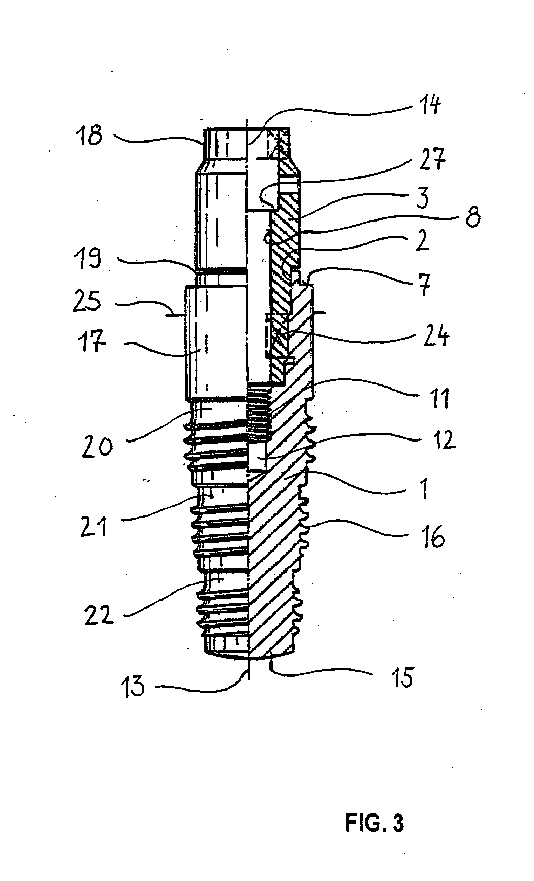

Figures 2 and 3 show a dental implant fixture component 1 in the form of a stem or post partially in elevation and partially in an axial longitudinal section, wherein the implant component 1 can be anchored in the jawbone, and capable of receiving in its cavity 6 a head as part of a connecting means 3 which can be joined to the post 1. The head may be constructed in two pieces, a coupling means 9 and a crown support 3, which can also be integral with each other.

The second component 3 with its dental crown support 18 has an outer surface that tapers toward the post 1. Its bottom face is thus smaller than it would be in the case of a cylindrical configuration with an outside diameter corresponding to that of the post 1. Due to this "diminution" of the bottom face, it is easier to work, and especially to grind or mill flat the face during the machining step of the manufacturing method described with the first embodiment.

The implant component or post 1 is formed of non-metal material as described with the first exemplary embodiment of the invention. The post 1 has a stepped profile in which the diameters of successive steps decrease toward the root end 15 of the post 1. The top section 17 adjacent the top end 19 has a cylindrical outer surface, while the three other steps 20, 21, 22 have self-tapping threads for turning and cutting into the jawbone. The three steps 20, 21, 22 provided with the threads are each of substantially the same length.

In the embodiment shown in figures 2 and 3, at least approximately three thread flights are provided on each of the threaded steps 20, 21, 22 so that only three turns are needed to screw it in. Since the post 1 is simply inserted into the stepped bore 23 in the jawbone leaving only the length of one step exposed, and then is screwed in for the length of only one step with three turns, the operating time is minimized without the fear of traumatizing the cortex with the screw thread.

A recess or cavity 6 provided in the interior of the implant component or post 1 comprises a portion 24 in the form of a hexagon with flat surfaces. This portion 24 serves to receive an inserted tool, such as an hexagonal screwdriver "Inbus" key, to enable a torque to be exerted about the longitudinal axis 13 in order to implant the post 1. Of course, portion 24 can also be configured to receive tools having other configurations in order to insert the post 1 into the jaw and screw it to a depth corresponding to the length of one step into the bore 23 which has been drilled accordingly.

However, the portion 24 is tapered along the axis 14, to provide a combination effect of a hexagon connecting surface with the play free seating of a cone connection as described with reference to figure 1.

Toward the root end 15 the cavity 6 contains an internal thread 11 with a smaller diameter than that of portion 24. Internal thread 11 is spaced axially from portion 24. Thus damage to the internal thread 11 by a tool designed for portion 24 is reliably prevented.

Although the aforedescribed configuration with screw threads 20, 21, 22 on the outer surfaces coaxial with the longitudinal axis 13 has proven to be practical, it is also within the scope of the invention to use configurations which instead have gaps on the outside surfaces corresponding to U.S. Pat. No. 4,185,383. The second implant component 3 or connecting means is fixedly joined to the post 1 by means of a screw 9, whose root end 10 engages the internal thread 11 of the post 1. Immediately after the post 1 is implanted, the cavity 6 is advantageously plugged with a temporary screw or the like (not shown). After the post 1 has set in the jaw, any gum tissue that has overgrown the top surface 7 is cut open and the temporary screw is removed again so that the connecting means 3 can be introduced into the cavity 6 in the manner shown and fastened by means of the screw 9.

The broken lines indicate the stepped bore 23 in the jawbone, whose upper edge 25 is likewise indicated by broken lines. The post 1 is shown in the position in which it has already been inserted into the jawbone with only one step-length remaining exposed. As can be seen, the bore 23 has four steps whose respective diameters are each at least equal to the outside or crest diameter of the thread of the step 20, 21, 22 of the post 1 which is screwed into the next following step of the bore 23. The post 1 is already inserted to 3/4 of its total length into the stepped bore 23, so that a precise alignment with the longitudinal axis 26 of bore 23 is established. The post 1 can then be screwed in by one more step-length, reliably and without special difficulty and without special measures for guiding the post 1.

In figure 3, the second component 3 as part of connecting means is inserted into the blind hole 12 in the post 1. Here the longitudinal bore 8 for the screw 9 for joining to the post 1 can easily be seen. This longitudinal bore 8 has an annular shoulder 27 for engagement by the head of the connecting screw 9 which can be screwed with its external thread 10 into the internal thread 11 of the post 1. The upper edge 25 of the jaw bone is indicated by the broken line. The upper end 19 of the post 1 extends a distance upwardly beyond the upper edge 25 of bore 23. The top surface 7 of the post 1 and the connecting means 3 consequently are situated in the gingival area.

The second component 3 of the connecting means is inserted into the cavity 6, the co-operation of the outer surface with the lateral surfaces of the hexagonal portion 24 assures that the connecting means is locked against rotation with respect to the post 1.

The implant component shown in figure 2 and 3, respectively, has a stepped top surface arrangement with an inner and upper first top surface 28 and an outer second top surface 7. The top section 17 of the first implant component 1, and especially the outer 7 and preferably also the inner top surface 28 of the first implant component 1, may be micro-roughened, preferably to a roughness R_{A} of about 0.7 µm to about 1.1 µm, preferably 0.7 µm to 0.9 µm. The roughness is preferably obtained by the treatment methods described above with respect to the first embodiment of the invention.

Alternatively, or in addition, the surfaces of the fixture 1 may be provided with one or more coatings as described with the first embodiment of the invention above.

The first top surface 28 of the implant component 1 surrounding the opening 2 of the cavity 6 is arranged generally perpendicular to the longitudinal axis 13 of the implant component 1 and is preferably at least 0.2 mm wide, depending on the size of the implant component 1.

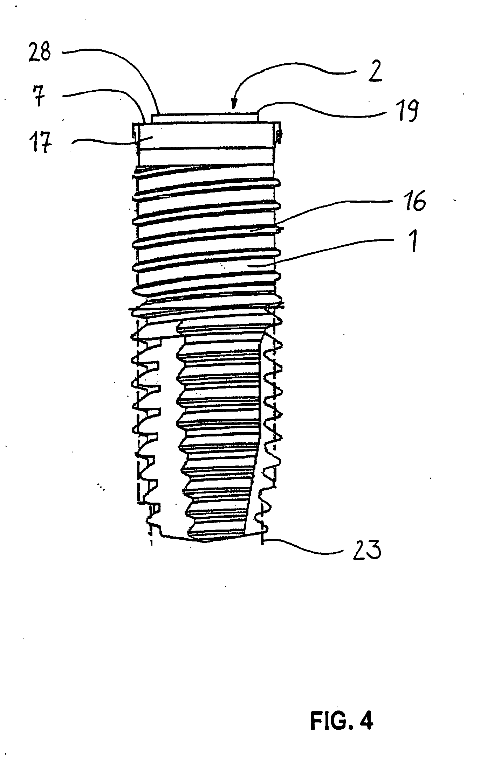

Figure 4 shows a further embodiment of an implant fixture component 1 according to the present invention. This type of implant is especially designed to form part of a platform type system with allows to provide a single size of a fixture 1 for insertion into the jawbone being combined with a variety of sizes of abutment components 3 forming connecting means for carrying a dental prosthesis superstructure. In this regard it is preferred that the outer diameter of the abutment 3 for interacting with the top surface 7 of the first implant component 1 does not exceed the diameter of the top surface 7 of the implant component 1 inserted into the jawbone. To the contrary, it has been found advisable to use a smaller diameter connecting means instead. So the individual conditions of the patient to be treated are accommodated to a high degree with a relatively small number of components, and a relatively large implant component 1 for minimizing mechanical stress in the bone can be used also for receiving only small dental prosthesis parts, where the mechanical conditions of the jawbone so require.

Also the top surface of this type of implant may be of a stepped arrangement depending on the size, with an inner and upper first top surface 28 and an outer second top surface 7. The top section 17 of the first implant component 1, and especially the outer 7 and preferably also the inner 28 top surface of the first implant component 1, may micro-roughened as described above with respect to the other embodiments of the invention.

Alternatively, or in addition, the surfaces of the fixture 1 may be at least partially provided with one or more coatings described above with respect to the other embodiments of the invention.

The inner edge of the upper first top surface 28 forming the outer diameter of the opening 2 of the cavity 6 for receiving the connecting means 3 has a diameter of approximately 1.6 mm. The total outer diameter of the top surfaces 7, 28 ranges from 2.7 to 8 mm depending on the size of the implant component.

The invention may be put into effect most effectively by treating a human or animal being with an implant and/or a fixture as described above.

## Claims

1. An implant comprising a fixture component (1) intended for insertion into a bone, at least one further abutment component (3) for providing a base for a prosthetic superstructure, and a connecting element (9) for mechanically securing the abutment (3) to the fixture (1),
wherein the fixture (1) comprises an external thread (16) or other protrusions for improving engagement between the fixture (1) and the bone,
wherein the connecting element (9) detachably interconnects the fixture (1) and the abutment (3),
wherein at least the fixture (1) and the abutment (3) are made of non-metal material,
wherein the fixture (1) comprises a recess or cavity (6) for detachably receiving the abutment (3) of the implant and the connecting element (9), the fixture (1) further comprising interlocking means (11) within said cavity (6) or recess for engagement with corresponding interlocking means (10) of the connecting element (9), and
wherein the recess or cavity (6) comprises a portion (24) in the form of a hexagon with flat surfaces, the fixture component (1) defining a longitudinal axis (14), and the portion (24) being tapered along the axis (14).

2. Implant according to claim1, wherein the non-metal material is selected from ceramic materials, plastics, or mixtures, or compounds thereof.

3. Implant according to claim 2, wherein the non-metal material is a zirconium oxide ceramic material, which may comprise yttrium oxide, preferably in an amount of up to about 8 % in weight, or magnesium oxide or calcium oxide.

4. Implant according to any of the preceding claims, wherein at least the cavity (6) and the interlocking means (11) of the fixture (1) are manufactured by machining a pre-sintered green blank body.

5. Implant according to claim 4, wherein the dimensions of the pre-sintered green body during machining are a reproduction of the desired end product at an enlarged scale.

6. Implant according to claim 5, wherein the scale is variable in all three dimensions.

7. Implant according to claim 5, wherein the scale is determined by a three dimensional transfer function f (x, y, z).

8. Implant according to claim 7, wherein three dimensional scale is determined from the three dimensional distribution of the density within the pre-sintered green body.

9. Implant according to any of the preceding claims, wherein at least the fixture (1) has a surface roughened by an abrasive mechanical, physical or chemical surface treatment.

10. Implant according to claim 9, wherein the surface treatment comprises laser treatment and plasma etching.

11. Implant according to any of the preceding claims, wherein at least a part of the circumferential surface of the fixture (1) is provided with a coating, the coating comprises one or more of the following: a biomolecular composition, peptides, polypeptides, amino acids, poly amino acids, growth factors.

12. Implant according to claim 11, wherein the coating comprises a compound having a domain that mimics collagen binding to cells, and having enhanced cell-binding with respect to collagen, the compound in an amount effective to promote cell attachment to the fixture.

13. Implant according to claim 11 or 12, wherein the coating comprises a synthetic peptide immobilized on the substrate, the peptide having a domain that mimics collagen binding to cells and having enhanced cell-binding with respect to collagen

14. Implant according to any of claims 11 to 13, wherein the coating comprises a synthetic peptide having the sequence Gly-Thr-Pro-Gly-Pro-Gln-Gly-Ile Ala-Gly-Gln-Arg-Gly-Val-Val.

15. Implant according to any of claims 11 to 13, wherein the coating comprises synthetic compositions that have a biological activity functionally comparable to that of all or some portion of P-15.

16. A dental prosthesis arrangement comprising at least one dental implant according to any of the preceding claims.

## Patentansprüche

1. Implantat umfassend ein Halteelement (1) vorgesehen zum Einsetzen in einen Knochen, wenigstens ein weiteres Aufbauelement (3) zur Bereitstellung einer Basis für einen prothetischen Überbau, und ein Verbindungselement (9) zur mechanischen Befestigung des Aufbauelements (3) an dem Halteelement (1),
wobei das Halteelement (1) ein Außengewinde (16) oder andere Vorsprünge zur Verbesserung des Eingriffs zwischen dem Halteelement (1) und dem Knochen aufweist,
wobei das Verbindungselement (9) das Halteelement (1) und das Aufbauelement (3) lösbar verbindet,
wobei wenigstens das Halteelement (1) und das Aufbauelement (3) aus nichtmetallischem Material hergestellt sind,
wobei das Halteelement (1) eine Vertiefung oder Kavität (6) umfasst zur lösbaren Aufnahme des Aufbauelements (3) des Implantats und des Verbindungselements (9), wobei das Halteelement (1) ferner Eingriffsmittel (11) innerhalb der Kavität (6) oder der Vertiefung zum Eingriff in entsprechende Eingriffsmittel (10) des Verbindungselements (9) aufweist, und
wobei die Vertiefung oder Kavität (6) einen Abschnitt (24) in Form eines Sechskants mit ebenen Flächen aufweist, das Halteelement (1) eine Längsachse (14) definiert und der Abschnitt (24) entlang der Längsachse (14) abgeschrägt ist.

2. Implantat nach Anspruch 1, bei dem das nichtmetallische Material ausgewählt ist aus keramischen Materialien, Kunststoffen, Mischungen oder Compounds daraus.

3. Implantat nach Anspruch 2, bei dem das nichtmetallische Material ein Zirkonoxid-Keramikmaterial ist, das Yttriumoxid enthalten kann, vorzugsweise in einer Menge von bis zu 8 Gew.%, oder Magnesiumoxid oder Kalziumoxid.

4. Implantat nach einem der vorgehenden Ansprüche, bei dem wenigstens die Kavität (6) und die Eingriffsmittel (11) des Halteelements (1) hergestellt sind durch spanende Bearbeitung eines vorgesinterten Grünkörpers.

5. Implantat nach Anspruch 4, bei dem die Abmessungen des vorgesinterten Grünkörpers während der spanenden Bearbeitung eine Wiedergabe des gewünschten Endproduktes in einem vergrößerten Maßstab darstellen.

6. Implantat nach Anspruch 5, bei dem der Maßstab in allen drei Dimensionen unterschiedlich ist.

7. Implantat nach Anspruch 5, bei dem der Maßstab bestimmt wird durch eine dreidimensionale Transferfunktion f (x, y, z).

8. Implantat nach Anspruch 7, bei dem der dreidimensionale Maßstabsfaktor bestimmt wird aus der dreidimensionalen Dichteverteilung innerhalb des vorgesinterten Grünkörpers.

9. Implantat nach einem der vorhergehenden Ansprüche, bei dem zumindest das Halteelement (1) eine Oberfläche aufweist, die aufgeraut ist durch eine abrasive mechanische, physikalische oder chemische Oberflächenbehandlung.

10. Implantat nach Anspruch 9, bei dem die Oberflächenbehandlung eine Laserbehandlung und Plasmaätzen umfasst.

11. Implantat nach einem der vorhergehenden Ansprüche, bei dem wenigstens ein Teil der Umfangsfläche des Halteelements (1) mit einer Beschichtung versehen ist, wobei die Beschichtung ein oder mehreres der Folgenden umfasst: eine biomolekulare Zusammensetzung, Peptide, Polypeptide, Aminosäuren, Polyaminosäuren, Wachstumsfaktoren.

12. Implantat nach Anspruch 11, bei dem die Beschichtung eine Zusammensetzung umfasst mit einer Domäne, die die Kollagenbindung an Zellen nachahmt, und eine erhöhte Zellbindung bezogen auf Kollagen aufweist, wobei die Zusammensetzung in einer Menge vorhanden ist, um wirksam die Zellanlagerung an dem Haltelement zu unterstützen.

13. Implantat nach Anspruch 11 oder 12, bei dem die Beschichtung ein auf dem Substrat immobilisiertes synthetisches Peptid umfasst, wobei das Peptid ein Domäne aufweist, die die Kollagenbindung an Zellen nachahmt und bezogen auf Kollagen eine verbesserte Zellbindung aufweist.

14. Implantat nach einem der Ansprüche 11 bis 13, bei dem die Beschichtung ein synthetisches Peptid umfasst, das die Sequenz: Gly-Thr-Pro-Gly-Pro-Gln-Gly-Ile-Ala-Gly-Gln-Arg-Gly-Val-Val aufweist.

15. Implantat nach einem der Ansprüche 11 bis 13, bei dem die Beschichtung synthetische Zusammensetzungen aufweist, die eine biologische funktionale Aktivität aufweist, die ganz oder teilweise vergleichbar ist mit P-15.

16. Dentalprothesenanordnung umfassend wenigstens ein Zahnimplantat nach einem der vorhergehenden Ansprüche.

## Revendications

1. Implant comprenant un composant de dispositif de fixation (1) prévu pour l'insertion dans un os, au moins un composant de butée supplémentaire (3) pour fournir une base pour une superstructure prothétique, et un élément de raccordement (9) pour fixer mécaniquement la butée (3) sur le dispositif de fixation (1),
dans lequel le dispositif de fixation (1) comprend un filetage externe (16) ou d'autres saillies pour améliorer la mise en prise entre le dispositif de fixation (1) et l'os,
dans lequel l'élément de raccordement (9) interconnecte de manière détachable le dispositif de fixation (1) et la butée (3),
dans lequel au moins le dispositif de fixation (1) et la butée (3) sont réalisés à partir d'un matériau non métallique,
dans lequel le dispositif de fixation (1) comprend un évidement ou cavité (6) pour recevoir de manière détachable la butée (3) de l'implant et l'élément de raccordement (9), le dispositif de fixation (1) comprenant en outre des moyens de verrouillage (11) à l'intérieur de ladite cavité (6) ou évidement pour la mise en prise avec les moyens de verrouillage (10) correspondants de l'élément de raccordement (9), et
dans lequel l'évidement ou cavité (6) comprend une partie (24) se présentant sous la forme d'un hexagone avec des surfaces plates, le composant (1) du dispositif de fixation définissant un axe longitudinal (14) et la partie (24) étant progressivement rétrécie le long de l'axe (14).

2. Implant selon la revendication 1, dans lequel le matériau non métallique est choisi parmi des matériaux en céramique, des plastiques ou des mélanges ou leurs composés.

3. Implant selon la revendication 2, dans lequel le matériau non métallique est un matériau en céramique d'oxyde de zirconium qui peut comprendre de l'oxyde d'yttrium, de préférence selon une quantité jusqu'à environ 8 % en poids, ou de l'oxyde de magnésium ou de l'oxyde de calcium.

4. Implant selon l'une quelconque des revendications précédentes, dans lequel au moins la cavité (6) et les moyens de verrouillage (11) du dispositif de fixation (1) sont fabriqués en usinant un corps d'ébauche cru pré-fritté.

5. Implant selon la revendication 4, dans lequel les dimensions du corps cru pré-fritté pendant l'usinage sont une reproduction du produit fini souhaité à une plus grande échelle.

6. Implant selon la revendication 5, dans lequel l'échelle est variable dans les trois dimensions.

7. Implant selon la revendication 5, dans lequel l'échelle est déterminée par une fonction de transfert en trois dimensions f (x, y, z).

8. Implant selon la revendication 7, dans lequel l'échelle tridimensionnelle est déterminée à partir de la répartition tridimensionnelle de la densité dans le corps cru pré-fritté.

9. Implant selon l'une quelconque des revendications précédentes, dans lequel au moins le dispositif de fixation (1) a une surface rendue rugueuse par un traitement de surface mécanique abrasif, physique ou chimique.

10. Implant selon la revendication 9, dans lequel le traitement de surface comprend le traitement au laser et la gravure au plasma.

11. Implant selon l'une quelconque des revendications précédentes, dans lequel au moins une partie de la surface circonférentielle du dispositif de fixation (1) est prévue avec un revêtement, le revêtement comprend un ou plusieurs des éléments suivants : une composition biomoléculaire, des peptides, des polypeptides, des acides aminés, des acides polyaminés, des facteurs de croissance.

12. Implant selon la revendication 11, dans lequel le revêtement comprend un composé ayant un domaine qui imite le collagène se liant aux cellules, et ayant une liaison cellulaire améliorée par rapport au collagène, le composé est dans une quantité efficace pour favoriser la fixation cellulaire sur le dispositif de fixation.

13. Implant selon la revendication 11 ou 12, dans lequel le revêtement comprend un peptide synthétique immobilisé sur le substrat, le peptide ayant un domaine qui imite le collagène se liant aux cellules et ayant une liaison cellulaire améliorée par rapport au collagène.

14. Implant selon l'une quelconque des revendications 11 à 13, dans lequel le revêtement comprend un peptide synthétique ayant la séquence Gly-Thr-Pro-Gly-Pro-Gln-Gly-lle-Ala-Gly-Gln-Arg-Gly-Val-Val.

15. Implant selon l'une quelconque des revendications 11 à 13, dans lequel le revêtement comprend des compositions synthétiques qui ont une activité biologique fonctionnellement comparable à celle de la totalité ou d'une partie de P-15.

16. Agencement de prothèse dentaire comprenant au moins un implant dentaire selon l'une quelconque des revendications précédentes.
